# FASCICULE DE BREVET EUROPEEN

(11) **EP 1 215 459 B1**
(45) Date de publication et mention de la délivrance du brevet: **09.02.2005**
(21) Numéro de dépôt: 01403067.0
(22) Date de dépôt: 29.11.2001
(51) Int. Cl.: F25J 3/02, C10G 70/00

(54) **Procédé et installation pour la récupération et la purification de l'éthylène produit par pyrolyse d'hydrocarbures**
Verfahren und Anlage zur Rückgewinnung und Reinigung von Äthylen hergestellt durch Pyrolyse von Kohlenwasserstoff
Process and installation for recovering and purifying of ethylen produced by hydrocarbon pyrolysis

(30) Priorité: 07.12.2000 FR 0015922
(43) Date de publication de la demande: 19.06.2002
(73) Titulaire: TECHNIP-COFLEXIP, 92400 Courbevoie (FR)
(72) Inventeur: Kaiser, Victor, 78600 Maisons Laffitte (FR); Laugier, Jean-Paul, 75013 Paris (FR); Simon, Yvon, 78350 Les Loges en Josas (FR)
(74) Mandataire: Jacobson, Claude

(56) Documents cités:
- EP-A- 0 377 949
- EP-A- 0 624 562
- EP-A- 0 675 094
- US-A- 4 167 402
- US-A- 5 689 032
- US-A- 5 884 504

## Description

La présente invention concerne de façon générale et selon un premier de ses aspects, l'industrie chimique et en particulier une méthode de récupération à haut rendement et de purification de l'éthylène ainsi que d'autres produits issus d'un gaz produit par pyrolyse d'hydrocarbures. Cette invention concerne également une installation et des équipements destinés à mettre en oeuvre cette méthode à une échelle industrielle.

Un grand nombre d'ouvrages et de brevets traitant de la production, de la récupération et de la purification des oléfines montre leur importance industrielle et les problèmes rencontrés au cours de la mise en oeuvre des différents procédés.

Récemment, la capacité de production des unités d'éthylène, a atteint et même dépassé le chiffre de 1 million de tonnes par an, pour une seule ligne, ce qui nécessite une nouvelle approche de la conception du procédé, des équipements et de la contrôlabilité de l'unité.

Dans les systèmes de récupération et de purification, spécialement pour l'éthylène, l'élimination de l'acétylène constitue un élément clé de la purification. En raison de sa volatilité relative par rapport à l'éthylène et à l'éthane, il ne peut pas être séparé par distillation. Dans la pratique industrielle, il n'y a que deux procédés appliqués : l'absorption de l'acétylène par un solvant et l'hydrogénation en éthylène et en éthane.

La première méthode met en jeu un solvant qui est habituellement du N,N-diméthylformamide (DMF) ou de la N-méthylpyrolidone (NMP), ce qui permet de récupérer préférentiellement l'acétylène sous forme dissoute.

La deuxième méthode, qui correspond à une hydrogénation catalytique, est généralement réalisée soit par un traitement de la totalité du gaz issu du craquage avant séparation de l'hydrogène contenu dans celui-ci, soit par un traitement séparé des coupes contenant des hydrocarbures en C₂ après un ajout d'hydrogène suffisamment pur pour transformer tout l'acétylène en éthylène et en éthane. Ces deux types d'hydrogénation utilisent des catalyseurs à base de palladium ayant différentes formulations.

L'étape d'hydrogénation de l'acétylène a également été le sujet de très nombreux ouvrages et inventions traitant du système de catalyseur et des formulations du catalyseur et exposant les inconvénients spécifiques liés à chacune des technologies d'hydrogénation:

Ainsi, dans le cas du traitement de la totalité du gaz de craquage issu de la pyrolyse d'hydrocarbures dans un réacteur d'hydrogénation, il peut se produire une réaction d'emballement correspondant à une accélération de la cinétique de la réaction de transformation de l'acétylène en éthylène (et aussi de réactions secondaires indésirables) en raison d'une augmentation importante de la température du catalyseur conjointement à la présence d'un grand excès d'hydrogène (50 à 100 fois la quantité requise par la stoechiométrie). L'éthylène peut alors se transformer en éthane et provoquer ainsi une forte augmentation de la température qui oblige à dépressuriser immédiatement le réacteur pour éviter une explosion.

Dans le cas du traitement de la coupe C₂ seule, il peut se produire une polymérisation de l'acétylène et une désactivation progressive du catalyseur, en raison de la grande concentration en hydrocarbures insaturés de la coupe à traiter, ce qui exige de procéder à une régénération ou a un remplacement périodique de la charge du catalyseur. Généralement, on installe un réacteur de réserve afin de ne pas interrompre la production. De plus, il faut utiliser un courant d'hydrogène purifié pour la réaction et ces deux aspects tendent à augmenter les investissements pour les équipements de réserve ou les équipements servant uniquement à l'objectif décrit.

La présente invention pallie les inconvénients respectifs des techniques antérieures connues, par la purification de la fraction riche en éthylène à une étape intermédiaire du procédé.

Ainsi, l'invention concerne, selon un des ses aspects, un procédé de fractionnement d'un gaz sensiblement anhydre issu de la pyrolyse d'hydrocarbures contenant de l'hydrogène et des hydrocarbures, notamment des hydrocarbures de C₁ à C₃, incluant de l'éthylène, du propylène et de l'acétylène, en au moins un courant enrichi en hydrogène et/ou méthane, au moins un courant enrichi en éthylène et appauvri en acétylène et au moins un courant enrichi en propylène, comprenant des étapes où:
a) on refroidit et on liquéfie progressivement le gaz issu de la pyrolyse d'hydrocarbures sous pression par passage dans une série de zones d'échange de chaleur de plus en plus froides, on sépare du gaz de pyrolyse au moins un condensat après passage dans chaque zone d'échange de chaleur, l'un au moins des condensats étant enrichi en propylène et au moins un autre condensat étant enrichi en éthylène et en éthane et renfermant en solution une proportion mineure d'hydrogène, de méthane et d'acétylène, et on collecte le gaz résiduel, riche en hydrogène,
b) on évapore au moins en partie, par abaissement de la pression, le condensat enrichi en éthylène et éthane et le condensat enrichi en propylène et on les réchauffe, indépendamment ou non, dans au moins une des zones d'échange de chaleur par échange thermique avec des fluides à refroidir, incluant au moins le gaz issu de la pyrolyse, pour fournir respectivement une fraction au moins partiellement évaporée issue de la détente et du réchauffement de la fraction enrichie en éthylène et en éthane, et une fraction au moins partiellement évaporée issue de la détente et du réchauffement de la fraction enrichie en propylène, de façon à fournir au moins une partie du froid nécessaire au refroidissement et à la liquéfaction progressives d'au moins ledit gaz issu de la pyrolyse d'hydrocarbures lors de son passage dans lesdites zones successives d'échange de chaleur,
c) on introduit les fractions au moins partiellement évaporées issues de l'étape (b) dans une partie d'une colonne de distillation appelée dééthaniseur, le condensat au moins partiellement évaporé enrichi en éthylène et en éthane étant admis en un point de la partie de colonne de distillation appelée dééthaniseur plus élevé que le condensat au moins partiellement évaporé enrichi en propylène, la partie de colonne de distillation appelée dééthaniseur fonctionnant dans des conditions de température et pression permettant de séparer, dans une partie supérieure, un premier courant de tête gazeux enrichi en éthylène et en éthane renfermant, en proportion mineure, de l'acétylène, de l'hydrogène et du méthane, et dans une partie inférieure, un premier courant de fond liquide enrichi en propylène, qui est collecté,
d) on envoie le premier courant de tête gazeux enrichi en éthylène et en éthane provenant de l'étape (c) dans une zone d'élimination d'acétylène par extraction au solvant et/ou par hydrogénation sélective de l'acétylène au moyen de l'hydrogène contenu dans le premier courant de tête gazeux, pour fournir un courant essentiellement exempt d'acétylène et
e) on refroidit et on fractionne, dans une partie d'une colonne de distillation appelée déméthaniseur, le courant gazeux essentiellement exempt d'acétylène issu de l'étape (d) en une deuxième fraction gazeuse de tête, enrichie en hydrogène et/ou méthane, qui est collectée, et une deuxième fraction liquide de fond, enrichie en éthylène et en éthane et essentiellement exempte d'acétylène, qui est également collectée.

Le gaz de charge est en général essentiellement exempt d'eau afin de prévenir des dépôts de glace dans les circuits à basse température. Ainsi, une teneur en eau inférieure à 10 ppm en volume, de préférence inférieure à 1 ppm, est souhaitable.

Selon un de ses aspects, le procédé selon l'invention peut mettre en oeuvre le courant de gaz issu de la pyrolyse d'hydrocarbures à une pression de 15-50 bar, de préférence 28-38 bar, et la zone de distillation appelée dééthaniseur peut être à une pression de 10-30 bar, de préférence 14-24 bar, plus basse que la pression du gaz de pyrolyse.

Selon un de ses aspects, le procédé selon l'invention peut mettre en oeuvre les condensats évaporés introduits dans la partie de la colonne de distillation appelée dééthaniseur, qui contiennent de l'hydrogène dissous en proportion telle que le premier courant de tête gazeux renferme de 2 à 10 %, de préférence de 4 à 5 %, en moles, d'hydrogène, et l'étape (d) peut être mise en oeuvre par hydrogénation sélective essentiellement en éthylène de l'acétylène contenu dans le premier courant de tête gazeux au moyen de l'hydrogène contenu dans ledit premier courant de tête gazeux de l'étape (c), la température de la zone d'hydrogénation étant comprise entre 0 et 160°C inclus.

Selon un de ses aspects, le procédé selon l'invention peut mettre en oeuvre l'hydrogène dissous dans les condensats évaporés introduits dans la partie de la colonne de distillation appelée dééthaniseur, de sorte qu'il est le seul hydrogène utilisé pour l'hydrogénation effectuée à l'étape (d).

Selon un de ses aspects, le procédé selon l'invention peut être mis en oeuvre en envoyant dans la partie haute du dééthaniseur de l'étape (c) deux ou trois condensats obtenus après passage successif du gaz de pyrolyse respectivement dans deux ou trois dernières zones d'échange de chaleur de l'étape (a), en considérant que la première zone d'échange de chaleur est celle qui est la première à être en contact avec le gaz de pyrolyse.

Le gaz de pyrolyse peut être, par exemple, un gaz de pyrolyse de naphta ou un gaz de pyrolyse d'éthane.

Selon un des aspects du procédé conforme à l'invention, la deuxième fraction gazeuse de tête issue du déméthaniseur peut être épurée par distillation pour récupérer de l'éthylène et de l'éthane.

Selon un des aspects du procédé conforme à l'invention, le gaz de pyrolyse peut être un gaz de pyrolyse d'éthane ou de mélange éthane/propane et la deuxième fraction gazeuse de tête issue du déméthaniseur peut être mélangée avec le gaz de pyrolyse sans récupération d'éthylène, pour un nouveau traitement en mélange avec le gaz de pyrolyse à l'étape (a).

Selon un des aspects du procédé conforme à l'invention, la teneur en hydrogène du premier courant de tête gazeux issu du dééthaniseur peut être augmentée par l'ajout d'hydrogène provenant de la tête d'un séparateur d'un fluide, ce fluide provenant de la réfrigération dans une zone d'échange de chaleur du fluide résiduel gazeux provenant de la réfrigération dans les zones d'échange de chaleur successives du gaz de pyrolyse.

Selon un des aspects du procédé conforme à l'invention, on recycle une partie de la deuxième fraction liquide de fond provenant du déméthaniseur vers le dééthaniseur, de manière à réduire la concentration en acétylène du premier courant de tête gazeux issu du dééthaniseur.

Selon un des aspects du procédé conforme à l'invention, l'étape (d) peut être mise en oeuvre par extraction de l'acétylène au moyen d'un solvant.

Selon un des aspects du procédé conforme à l'invention, la concentration en monoxyde de carbone contenu dans le premier courant de tête gazeux peut avoir un effet modérateur sur la vitesse de la réaction catalysée dans la zone d'élimination d'acétylène.

Selon un autre de ses aspects, la présente invention concerne une installation de fractionnement d'un gaz issu de la pyrolyse d'hydrocarbures renfermant de l'hydrogène et des hydrocarbures, notamment des hydrocarbures de C₁ à C₃, incluant de l'éthylène, du propylène et de l'acétylène, en au moins un courant enrichi en hydrogène et/ou méthane, au moins un courant enrichi en éthylène et appauvri en acétylène et au moins un courant enrichi en propylène, comprenant:
a) des moyens pour refroidir et liquéfier progressivement le gaz issu de la pyrolyse d'hydrocarbures sous pression par passage dans une série de zones d'échange de chaleur de plus en plus froides, des moyens pour séparer du gaz de pyrolyse au moins un condensat après passage dans chaque zone d'échange de chaleur, l'un au moins des condensats étant enrichi en propylène et au moins un autre condensat étant enrichi en éthylène et en éthane et renfermant en solution une proportion mineure d'hydrogène, de méthane et d'acétylène, et des moyens pour collecter le gaz non-condensé résiduel, riche en hydrogène,
b) des moyens pour évaporer au moins en partie, par abaissement de la pression, le condensat enrichi en éthylène et en éthane et le condensat enrichi en propylène et des moyens pour les réchauffer indépendamment dans au moins une des zones d'échange de chaleur par échange thermique avec des fluides à refroidir, pour fournir respectivement une fraction au moins partiellement évaporée issue de la détente et du réchauffement de la fraction enrichie en éthylène et en éthane, et une fraction au moins partiellement évaporée issue de la détente et du réchauffement de la fraction enrichie en propylène, de façon à fournir au moins une partie du froid nécessaire au refroidissement et à la liquéfaction progressives d'au moins le gaz issu de la pyrolyse d'hydrocarbures lors de son passage successif dans les zones d'échange de chaleur,
c) des moyens pour introduire les fractions au moins partiellement évaporées issues de l'étape (b) dans une partie d'une colonne de distillation appelée dééthaniseur, le condensat au moins partiellement évaporé enrichi en éthylène et en éthane étant admis en un point de la partie de colonne de distillation plus élevé que le condensat au moins partiellement évaporé enrichi en propylène, la partie de colonne de distillation fonctionnant dans des conditions de température et pression permettant de séparer, dans une partie supérieure, un premier courant de tête gazeux enrichi en éthylène et éthane renfermant, en proportion mineure, de l'acétylène, de l'hydrogène et du méthane, et dans une partie inférieure, un premier courant de fond liquide enrichi en propylène, qui est collecté,
d) des moyens pour envoyer le premier courant de tête gazeux enrichi en éthylène et éthane provenant de l'étape (c) dans une zone d'élimination d'acétylène par extraction au solvant et/ou par hydrogénation sélective de l'acétylène au moyen de l'hydrogène contenu dans le premier courant de tête gazeux, pour fournir un courant essentiellement exempt d'acétylène, et
e) des moyens pour refroidir et fractionner, dans une partie d'une colonne de distillation appelée déméthaniseur, le courant gazeux essentiellement exempt d'acétylène issu de l'étape (d) en une deuxième fraction gazeuse de tête, enrichie en hydrogène et/ou méthane qui est collectée, et une deuxième fraction liquide de fond, enrichie en éthylène et éthane essentiellement exempte d'acétylène qui est également collectée.

L'invention est décrite en se référant aux schémas joints et en montrant deux modes de réalisation de l'invention à titre d'illustration d'une manière non limitative.

Dans les schémas :
La fig. 1 montre le schéma de principe du traitement d'un gaz issu de la pyrolyse de l'éthane/propane et/ou du gaz de pétrole liquéfié (GPL);
La Fig. 2 montre le même traitement appliqué au gaz issu de la pyrolyse du naphta et d'hydrocarbures plus lourds.

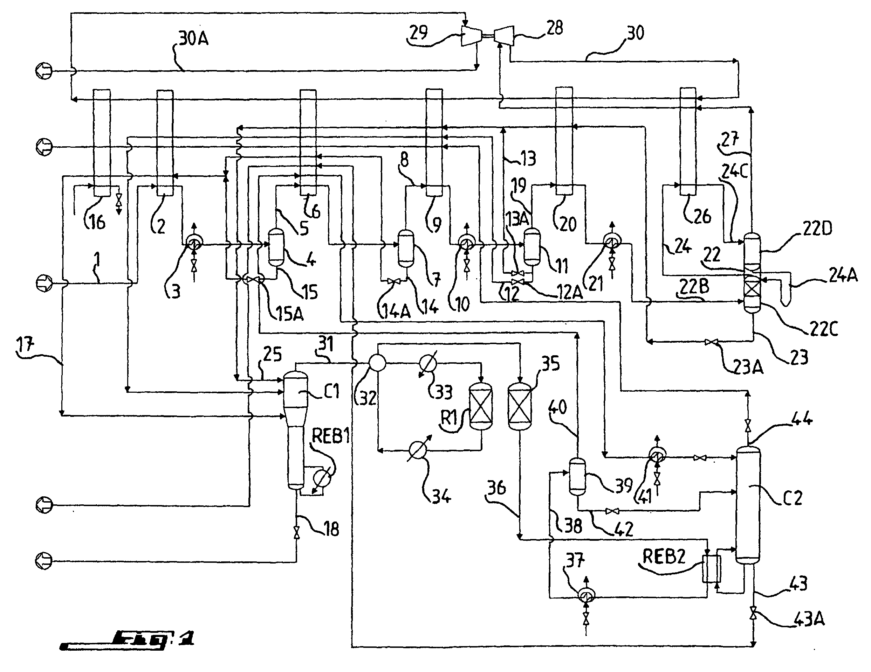

Pour la Fig. 1, le numéro 1 désigne la ligne d'alimentation du gaz de pyrolyse suffisamment sec (par exemple moins de 10 ppm d'eau) à une pression choisie selon la pression d'hydrogène requise (par exemple de 15 à 50 bar, de préférence entre 28 et 38 bar).

La composition typique d'un gaz obtenu par craquage d'éthane figure dans le tableau ci-dessous (en % molaire):

| H₂ | CH₄ | C₂H₂ | C₂H₄ | C₂H₆ | Coupe C₃ | Coupe C₄ | C₅+ | CO/CO₂ | TOTAL |
|---|---|---|---|---|---|---|---|---|---|
| 36,9 | 5,4 | 0,3 | 34,2 | 21,0 | 0,6 | 0,6 | 1,0 | 0,6 | 100,00 |

Ce gaz est refroidi dans l'échangeur de chaleur 2 à flux multiples et dans l'échangeur 3 respectivement par échange de chaleur avec les gaz froids produits par vaporisation des condensats mentionnés ci-après et par vaporisation de propylène circulant dans une boucle de refroidissement classique en circuit fermé.

Le gaz partiellement condensé alimente le séparateur 4 à une température comprise de préférence entre moins 30 et moins 40°C.

Le gaz 5 collecté en tête du séparateur 4 est refroidi davantage, dans l'échangeur de chaleur à flux multiples 6, par les gaz froids produits par vaporisation des condensats mentionnés plus loin et en plus par le produit 43 qui est la coupe C₂ provenant du fond du déméthaniseur C2.

Le gaz partiellement condensé dans l'échangeur 6 alimente ensuite le séparateur 7 à une température comprise de préférence entre moins 45 et moins 55°C. Le gaz 8 collecté en tête du séparateur 7, est refroidi encore dans les échangeurs de chaleur 9 et 10, respectivement par les gaz froids, comme précédemment et par vaporisation d'éthylène circulant dans un cycle de refroidissement en circuit fermé.

Le gaz partiellement condensé alimente le séparateur 11 à une température comprise de préférence entre moins 65 et moins 75°C.

Le liquide sortant du séparateur 11 est de préférence divisé en deux parties, le produit 12 et le produit 13, préalablement détendus respectivement dans les vannes 12A et 13A.

Le produit 12 s'écoule à contre-courant du gaz d'alimentation à travers les échangeurs de chaleur 9, 6 et 2 et alimente la section haute de la colonne de distillation C1. Le produit 12 est partiellement vaporisé avant d'alimenter la colonne C1 nommée dééthaniseur car son rôle est essentiellement de séparer l'éthane, l'éthylène et les hydrocarbures plus légers en tête, et le propylène et les fractions plus lourdes en fond de colonne.

Le produit liquide 14 provenant du séparateur 7 est détendu dans la vanne 14A et s'écoule à contre-courant du gaz d'alimentation dans l'échangeur de chaleur 6, se mélange au produit 15 détendu dans la vanne 15A issu du fond du séparateur 4, puis s'écoule à contre-courant du gaz de pyrolyse dans l'échangeur de chaleur 2. Il est ensuite vaporisé en circulant dans l'échangeur à flux multiples 16. Le produit réchauffant ledit échangeur peut être du propylène provenant d'un cycle en circuit fermé ou tout autre fluide chaud approprié. Le produit sortant 17 contient essentiellement les hydrocarbures en C₃ et les hydrocarbures plus lourds contenus dans le gaz d'alimentation 1, à l'exception de ceux contenus dans les produits 12 et 13 et alimente la colonne C1 au niveau de sa section moyenne. Dans une variante les produits 14 et 15 sont envoyés séparément à la colonne C1.

La colonne de distillation C1 est dotée d'un rebouilleur réchauffé par un fluide chaud dans un échangeur de chaleur REB1, qui est par exemple soit de l'eau chaude du procédé soit de la vapeur à basse pression en fonction de la température, comprise de préférence entre 60 et 80 °C, liée pour sa part à la composition du fond de colonne. La pression de service de la colonne C1 est comprise de préférence entre 14 et 24 bar.

Le produit 18 soutiré du fond de la colonne C1 peut être traité de manière classique pour récupérer le propylène dans une unité non représentée située en aval du procédé.

Le courant gazeux 19 provenant du séparateur 11 est refroidi davantage dans un échangeur de chaleur 20 par des gaz à basse température comme expliqué plus loin, et dans l'échangeur de chaleur 21 par vaporisation d'éthylène provenant d'un cycle de refroidissement en circuit fermé. Le gaz partiellement condensé 22B obtenu à une température comprise entre -90 et -100 °C alimente le séparateur d'éthylène 22 dans une partie basse 22C.

Le produit liquide 23 collecté en pied du séparateur d'éthylène 22 est détendu dans la vanne 23A, réchauffé par le gaz d'alimentation dans l'échangeur de chaleur 20, se mélange éventuellement avec le produit 13 qui sort du séparateur 11 et a été détendu dans la vanne 13A, et est à nouveau réchauffé et partiellement vaporisé dans les échangeurs de chaleur 9 et 6. Le produit résultant 25 est le reflux de la colonne C1.

Le procédé et les équipements décrits représentent les premières caractéristiques remarquables de l'invention dans laquelle:

La colonne C1 qui est un dééthaniseur n'a pas besoin de système de condensation en tête et d'équipements qui lui sont liés.

Le produit de tête de colonne C1 est une coupe C₂ qui contient une certaine quantité de méthane et d'hydrogène dissous dans les condensats provenant des séparateurs 4, 7, 11 et 22. Cette quantité est plus faible que dans les colonnes équivalentes des procédés connus antérieurement et détermine un avantage de coût supplémentaire.

La pression de la colonne C1 peut être choisie dans une plage permettant d'obtenir une basse température de fond et d'éviter les phénomènes connus d'encrassement sensibles à la température.

Retournant maintenant vers le séparateur 22, le gaz 24, issu de la tête de la partie basse 22C du séparateur 22 est encore refroidi dans l'échangeur de chaleur 26 à une température généralement inférieure à moins 120 °C.

Le gaz 24, refroidi et partiellement condensé, est réintroduit comme produit 24C dans le séparateur 22 dans sa partie haute 22D, surmontant la partie basse 22C. La fraction condensée séparée dans la partie haute 22D du séparateur 22 est introduite dans une canalisation 24A munie d'une garde hydraulique, puis est introduite en tête de la partie basse 22C.

La fraction gazeuse 27 issue en tête de la partie haute 22D du séparateur 22 est composée d'un mélange d'hydrogène, de méthane, d'oxyde de carbone et de traces d'éthylène. Le produit 27 est réchauffé dans les échangeurs de chaleur 26 et 20 avant d'être détendu dans la turbine 28.

Le produit 30, sortant de la turbine 28, est réchauffé par le gaz d'alimentation dans la série complète des échangeurs 26, 20, 9, 6, 2 et 16 avant d'être comprimé dans la machine 29, qui est attelée à la turbine 28. Le produit 30A est déchargé du procédé.

Le distillat de tête de la colonne C1, le produit 31, est réchauffé dans l'échangeur de chaleur 32 charge/effluent et dans le réchauffeur 33 avant d'entrer dans le réacteur catalytique R1. Le rôle de ce réacteur est d'hydrogéner sélectivement la petite quantité d'acétylène, généralement moins de 1 % en moles, et de le transformer en éthylène et en éthane. Ce système de catalyseur est basé sur un type connu, par exemple à base de palladium, et ne nécessite pas de description complémentaire. La température est par exemple de 0 à 160 °C.

La seconde caractéristique notable de l'invention, comparée à une technique équivalente connue, est le fait que l'hydrogénation soit réalisée sur un mélange de gaz contenant déjà suffisamment d'hydrogène en plus des trois composants d'hydrocarbures de la coupe C2, l'éthylène, l'éthane et l'acétylène, pour achever la réaction dans des conditions modérées et sûres. Il n'est pas nécessaire d'ajouter de l'hydrogène pur.

La composition typique du produit 31 figure dans le tableau ci-dessous :

| | H₂ | CO | CH₄ | C₂H₄ | C₂H₆ | C₂H₂ | C₃+ | TOTAL |
|---|---|---|---|---|---|---|---|---|
| % mol. | 4,70 | 0,04 | 4,86 | 57,10 | 32,40 | 0,80 | 0,10 | 100,00 |

Les avantages par rapport à la pratique de l'art antérieur sont les suivants :

Un débit en volume total moins élevé, d'où un volume de catalyseur réduit, en raison de la présence d'une faible proportion d'hydrogène seulement, par exemple de 4 à 5 % en moles d'hydrogène (plus généralement de 2 à 10 %), comparé à 30-40 % dans les systèmes traditionnels.

Une exploitation plus sûre en raison de la diminution du risque de réaction d'emballement dans le cas d'une hydrogénation de l'éthylène incontrôlée à caractère exothermique.

Il n'est pas nécessaire d'utiliser un ajout complémentaire d'hydrogène purifié pour alimenter le réacteur.

Les poisons du catalyseur sont en partie éliminés par la condensation et le fractionnement de la coupe C2 dans le dééthaniseur. La faible quantité de monoxyde de carbone présente dans le mélange à hydrogéner a un effet modérateur bénéfique sur la conduite de l'hydrogénation, puisque cela permet de limiter la fréquence et la rapidité d'éventuelles réactions d'emballement.

L'effluent du réacteur R1 ne contenant pratiquement plus d'acétylène est refroidi dans l'échangeur de chaleur 34, puis passe par l'échangeur de chaleur charge/effluent 32 et le sécheur de protection 35 contenant un déshydratant, par exemple un tamis moléculaire (zéolite) ou similaire, pour donner un gaz séché 36.

Le produit 36 contenant de l'hydrogène résiduel et du méthane, en plus de l'éthylène et de l'éthane, est refroidi dans le rebouilleur REB2 de la colonne C2 et le sous-refroidisseur 37 en utilisant du propylène provenant d'un cycle de réfrigération en circuit fermé. Le produit partiellement condensé 38 alimente le séparateur 39. Le gaz 40 collecté en tête du séparateur 39 est encore refroidi dans les échangeurs de chaleur 6 et 41, respectivement avec des gaz froids dans l'échangeur à flux multiple 6 et avec de l'éthylène vaporisé provenant d'un cycle de réfrigération en circuit fermé dans le refroidisseur 41, et alimente le haut de la colonne C2. Le liquide 42 provenant du fond du séparateur 39 alimente la zone moyenne de la colonne C2. La colonne C2 appelée déméthaniseur, fonctionnant à une pression de 10 à 16 bar, sépare les composants plus légers que l'éthylène en tête, et laisse les hydrocarbures en C₂ purifiés dans le produit de fond 43.

Le distillat 44 issu de la tête de la colonne C2, est envoyé vers les échangeurs de chaleur 9, 6, 2 et 16 pour être réchauffé et il peut être finalement recyclé vers le système de compression des gaz en dehors du champ d'application de cette invention.

Le produit de fond 43 riche en éthylène, est détendu dans la vanne 43A, réchauffé et partiellement vaporisé dans l'échangeur 6 et peut alimenter une colonne de purification d'éthylène de type classique, non représentée.

D'après cette description, la technologie préférée pour éliminer l'acétylène est l'hydrogénation réalisée sur le produit 31, car l'acétylène est transformé en éthylène et en éthane qui sont des produits mieux valorisables. Mais, si l'on souhaite conserver l'acétylène, un système d'extraction par solvant peut être appliqué au produit 31, qui remplacerait le circuit entier du réacteur d'hydrogénation, avec les équipements R1, 32, 33, 34 et 35. Cela constitue un autre avantage comparé aux procédés utilisant l'hydrogénation de l'acétylène sur tout le gaz de craquage, ce qui nécessite une modification pour y adapter un système d'extraction par solvant.

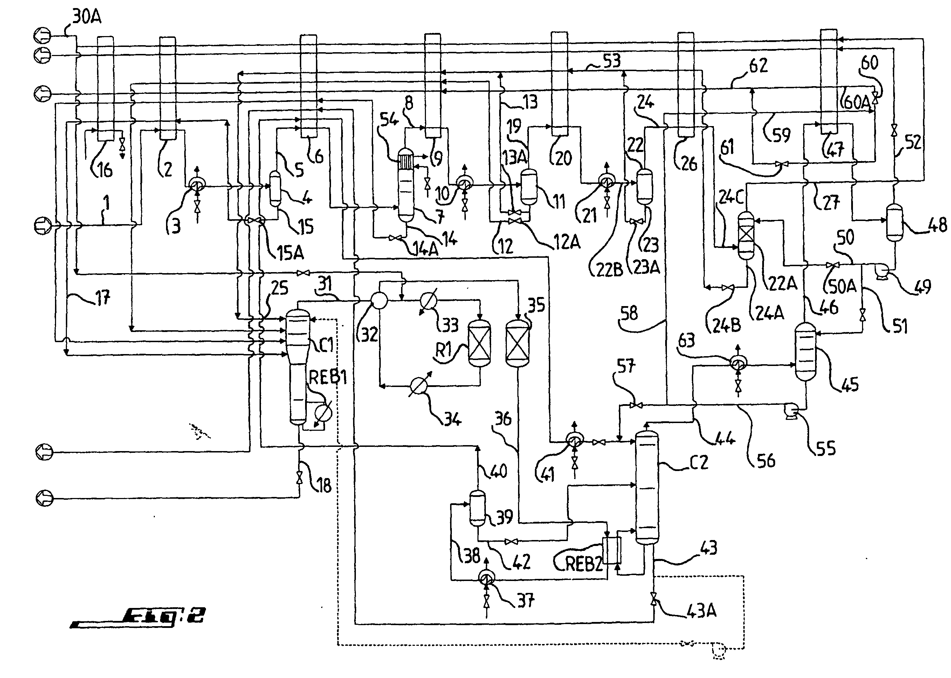

Pour la Fig. 2, le numéro 1 désigne la ligne d'alimentation du gaz de craquage ayant une composition typique indiquée ci-dessous, en % mol., tel qu'il est produit par pyrolyse du naphta ou d'une charge similaire.

| H₂ | CH₄ | C₂H₂ | C₂H₄ | C₂H₆ | Coupe C₃ | Coupe C₄ | C₅+ | CO | TOTAL |
|---|---|---|---|---|---|---|---|---|---|
| 15,36 | 28,83 | 0,63 | 29,75 | 2,92 | 10,18 | 4,94 | 7,355 | 0,035 | 100,00 |

La description est très semblable à celle de la Fig. 1 et il est donc suffisant de définir les données qui sont notablement différentes par rapport aux précédentes.

Le gaz numéro 1, refroidi dans les échangeurs de chaleur 2 et 3, alimente le séparateur 4 à une température généralement comprise entre moins 15 °C et moins 30°C.

Le gaz 5 est refroidi davantage dans l'échangeur à flux multiples 6 à une température comprise entre moins 20 et moins 35°C. Le gaz circule par un nombre limité de zones de contact à contre-courant du liquide condensé dans l'échangeur de chaleur 54 qui fait partie intégrante de la colonne d'absorption 7, et il est refroidi par de l'éthylène vaporisé provenant d'un cycle de refroidissement en circuit fermé. Une variante non indiquée sur la Fig. 2, mais facile à retracer pour un homme du métier, consiste à pomper une partie du liquide issu du séparateur 11, décrit plus loin, vers le sommet de la colonne d'absorption 7, pour générer dans cette colonne un produit liquide à contre-courant, restant dans le champ d'application de cette invention.

Le gaz 8, collecté en tête de la colonne d'absorption 7, contenant seulement des petites quantités d'hydrocarbures en C₃ et d'hydrocarbures plus lourds, est ensuite refroidi dans les échangeurs de chaleur 9 et 10 avant d'alimenter le séparateur 11. Le produit liquide est divisé en deux parties: le produit 12 est partiellement vaporisé dans les échangeurs de chaleur 9, 6 et 2 et alimente ensuite la colonne C1 à une hauteur intermédiaire. Le produit 13 est associé avec le produit froid provenant de l'échangeur 20 et est réchauffé dans les échangeurs de chaleur 9 et 6 avant d'alimenter le haut de la colonne C1.

Le produit liquide 14 provenant de la colonne d'absorption 7 est également réchauffé dans les échangeurs de chaleur 6, 2 et 16 et alimente la colonne C1 en position intermédiaire.

La colonne de distillation C1 est réchauffée par un fluide chaud circulant dans un rebouilleur REB1, fluide qui peut être de l'eau chaude du procédé ou de la vapeur à basse pression, ou une combinaison des deux en utilisant également un rebouilleur secondaire (non indiqué, mais familier pour un homme de métier).

Le résidu 18, collecté en pied de la colonne de distillation C1, est traité, pour en récupérer l'éthylène et d'autres produits de valeur, dans des unités en aval non représentées.

Le produit gazeux 19 provenant du séparateur 11 est refroidi dans l'échangeur de chaleur 20 par des gaz à basse température et dans l'échangeur 21 par de l'éthylène vaporisé provenant d'un cycle de refroidissement en circuit fermé. Le gaz partiellement condensé 22B alimente le séparateur 22 à une température de -90 à -100°C.

Le produit liquide 23 issu du séparateur 22, détendu dans la vanne 23A est réchauffé par le gaz d'alimentation dans l'échangeur de chaleur 20, se mélange avec le produit 13 provenant du séparateur 11 et préalablement détendu dans la vanne 13A.

En retournant maintenant au séparateur 22, le gaz de tête 24 est refroidi dans l'échangeur 26 à une température généralement comprise entre moins 110 et moins 120 °C pour fournir une fraction 24C qui alimente le séparateur 22A. La partie haute du séparateur 22A reçoit le liquide recyclé 50 après détente dans la vanne 50A et qui provient de la division en deux flux du liquide pompé du séparateur 48. Le séparateur 48 est lui-même alimenté par le distillat 46 du rectifieur de méthane 45, préalablement refroidi à une température généralement comprise entre moins 115 et moins 130°C dans l'échangeur de chaleur 47.

La fraction de tête gazeuse 52 issue du séparateur 48 est réchauffée successivement dans les échangeurs 47, 26, 20, 9, 6, 2 et 16, puis est collectée. La fraction de pied liquide issue du séparateur 48 est pompée par une pompe 49. Une partie du fluide issu de la pompe 49 est envoyé dans une conduite 51 comportant une vanne, vers le haut du séparateur 45.

Le gaz de tête 27, issu du séparateur 22A, est un mélange d'hydrogène, de méthane, d'oxyde de carbone et de traces d'éthylène. Ce produit est réchauffé dans la série complète d'échangeurs de chaleur à flux multiple décrite ci-dessus et quitte le circuit sous forme d'hydrogène brut. Si nécessaire, le produit 27 peut être purifié pour obtenir de l'hydrogène à 95 % dans un système de type Joule-Thompson avant de quitter la limite de cette partie du procédé. En outre, une partie du produit 27 peut être mélangée à la fraction 31 avant passage dans le réchauffeur 33, de façon à augmenter, lorsque c'est nécessaire, la concentration en hydrogène en vue de l'hydrogénation de l'acétylène dans le réacteur R1.

Le produit liquide 24A détendu dans la vanne 24B est réchauffé dans l'échangeur de chaleur 26, puis se mélange avec le produit 23 provenant du séparateur 22 après détente dans la vanne 23A. Le produit résultant 53 est réchauffé dans l'échangeur 20 par le gaz d'alimentation, puis se mélange avec le produit 13 avant d'être réchauffé et partiellement vaporisé dans les échangeurs de chaleur 9 et 6. Le produit résultant 25 est le reflux pour la colonne C1.

Comme il est décrit ci-dessus, la colonne C1 constitue la première caractéristique remarquable de l'invention.

La description du traitement du produit 31 à partir du distillat de tête de la colonne C1 est en tous points similaire à celle donnée sur la Fig. 1, et n'est donc pas répétée ici. Il faut tout de même noter que ce traitement constitue la deuxième caractéristique notable de l'invention.

La composition typique du produit 31 figure dans le tableau ci-dessous, en % mol. :

| | H₂ | CO | CH₄ | C₂H₄ | C₂H₆ | C₂H₂ | C₃+ | TOTAL |
|---|---|---|---|---|---|---|---|---|
| % mol. | 1,42 | 0,015 | 29,12 | 62,14 | 5,99 | 1,31 | 0,005 | 100,00 |

Les avantages par rapport à la pratique passée sont similaires à ceux qui sont décrits plus haut.

Le produit 36, contenant de l'hydrogène résiduel, du monoxyde de carbone et du méthane en plus de l'éthylène et de l'éthane, est traité d'une manière similaire à la description de la Fig. 1 et il est détaillé sur la Fig. 2. En raison de la plus grande quantité de méthane présent dans le distillat de tête 44 de la colonne C2, ce produit est traité dans une colonne de rectification de méthane 45, dont le principe est connu de l'homme de métier. Ainsi, le produit 44 gazeux issu de la tête de colonne de déméthanisation C2 est introduit dans le rectifieur 45 après refroidissement et condensation partielle dans un échangeur 63, par vaporisation d'éthylène provenant d'un cycle de refroidissement en circuit fermé.

La fraction liquide collectée en pied du rectifieur 45 est pompée par la pompe 55 pour fournir un liquide 56. Ce dernier est séparé en un premier flux 58 qui est refroidi dans l'échangeur 26 pour fournir le flux 59, et en un second flux qui est détendu dans une vanne 57 pour ensuite être mélangé à la fraction 40 après refroidissement dans les échangeurs thermiques 6 et 41.

Le traitement du produit de fond de la colonne C1 est similaire à celui donné dans la description détaillée de la Fig. 1.

Le flux 59 est réfrigéré dans l'échangeur thermique 47, puis est séparé en :
- un premier fluide 60A, passant dans une vanne 60 pour être ensuite réchauffé dans l'échangeur 47 pour fournir un fluide 62,
- et/ou un second fluide, passant dans une vanne 61 qui est ensuite mélangé au fluide 60A après réchauffage de ce dernier dans l'échangeur 47, pour fournir le fluide 62.

Ce dernier fluide 62 est alors réchauffé dans la succession d'échangeurs thermiques 26, 20, 9, 6, 2 et 16 et il est, dans ce mode de réalisation préféré, finalement recyclé vers le système de compression des gaz en dehors du champ d'application de cette invention.

L'élimination de l'acétylène du produit 31 peut être réalisée par absorption et extraction par solvant au lieu d'hydrogénation sans quitter le champ d'application de la présente invention.

La présente invention est illustrée et décrite suivant des réalisations préférées, mais il doit être compris que des changements et des modifications peuvent être effectués par l'homme du métier sans sortir du champ d'application tel que défini dans les revendications.

## Revendications

1. Procédé de fractionnement d'un gaz sensiblement anhydre issu de la pyrolyse d'hydrocarbures (1), renfermant de l'hydrogène et des hydrocarbures, notamment des hydrocarbures de C₁ à C₃, incluant de l'éthylène, du propylène et de l'acétylène, en au moins un courant enrichi en hydrogène et/ou méthane, au moins un courant enrichi en éthylène et appauvri en acétylène et au moins un courant enrichi en propylène, **caractérisé en ce que**:
a) on refroidit et on liquéfie progressivement ledit gaz issu de la pyrolyse d'hydrocarbures (1) sous pression par passage dans une série de zones d'échange de chaleur (2, 6, 9, 20) de plus en plus froides, on sépare dudit gaz de pyrolyse (1) au moins un condensat après passage dans chaque zone d'échange de chaleur, l'un au moins des condensats (15) étant enrichi en propylène et au moins un autre condensat (23) étant enrichi en éthylène et en éthane et renfermant en solution une proportion mineure d'hydrogène, de méthane et d'acétylène, et on collecte le gaz résiduel (27), riche en hydrogène,
b) on évapore au moins en partie, par abaissement de la pression, le condensat enrichi en éthylène et éthane (23) et le condensat enrichi en propylène (15) et on les réchauffe indépendamment ou non dans au moins une desdites zones d'échange de chaleur (2, 6, 9, 20) par échange thermique avec des fluides à refroidir, incluant au moins le gaz issu de la pyrolyse (1), pour fournir respectivement une fraction (25) au moins partiellement évaporée issue de la détente et du réchauffement de la fraction enrichie en éthylène et en éthane (23), et une fraction (17) au moins partiellement évaporée issue de la détente et du réchauffement de la fraction enrichie en propylène (15), de façon à fournir au moins une partie du froid nécessaire au refroidissement et à la liquéfaction progressives d'au moins ledit gaz issu de la pyrolyse d'hydrocarbures (1) lors de son passage dans lesdites zones successives d'échange de chaleur (2, 6, 9, 20),
c) on introduit les fractions au moins partiellement évaporées (17, 25) issues de l'étape (b) dans une partie d'une colonne de distillation (C1) appelée dééthaniseur, le condensat au moins partiellement évaporé enrichi en éthylène et en éthane (25) étant admis en un point de la dite partie de colonne de distillation (C1) plus élevé que le condensat au moins partiellement évaporé enrichi en propylène (17), ladite partie de colonne de distillation (C1) fonctionnant dans des conditions de température et pression permettant de séparer, dans une partie supérieure, un premier courant de tête gazeux (31) enrichi en éthylène et en éthane renfermant, en proportion mineure, de l'acétylène, de l'hydrogène et du méthane, et dans une partie inférieure, un premier courant de fond liquide (18) enrichi en propylène, qui est collecté,
d) on envoie le premier courant de tête gazeux (31) enrichi en éthylène et en éthane provenant de l'étape (c) dans une zone d'élimination d'acétylène (R1) par extraction au solvant et/ou par hydrogénation sélective de l'acétylène au moyen de l'hydrogène contenu dans ledit premier courant de tête gazeux (31), pour fournir un courant (36) essentiellement exempt d'acétylène et
e) on refroidit et on fractionne, dans une partie d'une colonne de distillation appelée déméthaniseur (C2), le courant gazeux essentiellement exempt d'acétylène (36) issu de l'étape (d) en une deuxième fraction gazeuse de tête (44), enrichie en hydrogène et/ou méthane, qui est collectée, et une deuxième fraction liquide de fond (43), enrichie en éthylène et en éthane et essentiellement exempte d'acétylène, qui est également collectée.

2. Procédé selon la revendication 1, **caractérisé en ce que** le courant de gaz issu de la pyrolyse d'hydrocarbures (1) est à une pression de 15-50 bar, de préférence 28-38 bar, et **en ce que** la zone de distillation (C1) est à une pression de 10-30 bar, de préférence 14-24 bar, plus basse que la pression du gaz de pyrolyse.

3. Procédé selon la revendication 1 ou la revendication 2, **caractérisé en ce que** les condensats évaporés introduits dans la partie de la colonne de distillation (C1) appelée dééthaniseur, contiennent de l'hydrogène dissous en proportion telle que ledit premier courant de tête gazeux (31) renferme de 2 à 10 %, de préférence de 4 à 5 %, en moles, d'hydrogène, et **en ce que** l'étape (d) est mise en oeuvre par hydrogénation sélective essentiellement en éthylène de l'acétylène contenu dans le premier courant de tête gazeux (31) au moyen de l'hydrogène contenu dans ledit premier courant de tête gazeux de l'étape (c), la température de la zone d'hydrogénation étant comprise entre de 0 et 160°C inclus.

4. Procédé selon l'une quelconque des revendications 1 à 3, **caractérisé en ce que** l'hydrogène dissous dans les condensats évaporés introduits dans la partie de la colonne de distillation (C1) appelée dééthaniseur, est le seul hydrogène utilisé pour l'hydrogénation effectuée à l'étape (d).

5. Procédé selon l'une quelconque des revendications 1 à 4, **caractérisé en ce qu'**on envoie dans la partie haute du dééthaniseur (C1) de l'étape (c) deux ou trois condensats obtenus après passage successif du gaz de pyrolyse respectivement dans deux ou trois zones d'échange de chaleur de l'étape (a), en considérant que la première zone d'échange de chaleur est celle qui est la première à être en contact avec le gaz de pyrolyse (1).

6. Procédé selon l'une quelconque des revendications 1 à 5, **caractérisé en ce que** la deuxième fraction gazeuse de tête (44) issue du déméthaniseur est épurée par distillation pour récupérer de l'éthylène et de l'éthane.

7. Procédé selon l'une quelconque des revendications 1 à 5, **caractérisé en ce que** le gaz de pyrolyse (1) est un gaz de pyrolyse d'éthane ou de mélange éthane/propane et **en ce que** la deuxième fraction gazeuse de tête (44) issue du déméthaniseur est mélangée avec le gaz de pyrolyse (1) sans récupération d'éthylène, pour un nouveau traitement en mélange avec le gaz de pyrolyse (1) à l'étape (a).

8. Procédé selon l'une quelconque des revendications 1 à 7, **caractérisé en ce que** la teneur en hydrogène du premier courant de tête gazeux (31) issu du dééthaniseur est augmentée par l'ajout d'hydrogène (27) provenant de la tête d'un séparateur (22 ou 22A) d'un fluide partiellement condensé (24C), ledit fluide (24C) provenant de la réfrigération dans une zone d'échange de chaleur (26) du fluide résiduel gazeux (24) provenant de la réfrigération dans les zones d'échange de chaleur successives (2, 6, 9, 20) du gaz de pyrolyse (1).

9. Procédé selon l'une quelconque des revendications 1 à 8, **caractérisé en ce que** l'on recycle une partie de la deuxième fraction liquide de fond (43) provenant du déméthaniseur vers le dééthaniseur, de manière à réduire la concentration en acétylène du premier courant de tête gazeux (31) issu du dééthaniseur.

10. Procédé selon l'une quelconque des revendications 1 à 9, **caractérisé en ce que** l'étape (d) est mise en oeuvre par extraction de l'acétylène au moyen d'un solvant.

11. Procédé selon l'une quelconque des revendications précédentes, **caractérisé en ce que** la concentration en monoxyde de carbone contenu dans le premier courant de tête gazeux (31) a un effet modérateur sur la vitesse de la réaction catalysée dans la zone d'élimination d'acétylène (R1).

12. Installation de fractionnement d'un gaz issu de la pyrolyse d'hydrocarbures (1) renfermant de l'hydrogène et des hydrocarbures, notamment des hydrocarbures de C₁ à C₃, incluant de l'éthylène, du propylène et de l'acétylène, en au moins un courant enrichi en hydrogène et/ou méthane, au moins un courant enrichi en éthylène et appauvri en acétylène et au moins un courant enrichi en propylène, **caractérisée en ce qu'**elle contient:
a) des moyens pour refroidir et liquéfier progressivement ledit gaz issu de la pyrolyse d'hydrocarbures (1) sous pression par passage dans une série de zones d'échange de chaleur (2, 6, 9, 20) de plus en plus froides, des moyens pour séparer dudit gaz de pyrolyse (1) au moins un condensat après passage dans chaque zone d'échange de chaleur, l'un au moins des condensats (15) étant enrichi en propylène et au moins un autre condensat (23) étant enrichi en éthylène et en éthane et renfermant en solution une proportion mineure d'hydrogène, de méthane et d'acétylène, et des moyens pour collecter le gaz résiduel (27), riche en hydrogène,
b) des moyens pour évaporer au moins en partie, par abaissement de la pression, le condensat enrichi en éthylène et en éthane (23) et le condensat enrichi en propylène (15) et des moyens pour les réchauffer indépendamment dans au moins une desdites zones d'échange de chaleur (2, 6, 9, 20) par échange thermique avec des fluides à refroidir, pour fournir respectivement une fraction (25) au moins partiellement évaporée issue de la détente et du réchauffement de la fraction enrichie en éthylène et en éthane (23), et une fraction (17) au moins partiellement évaporée issue de la détente et du réchauffement de la fraction enrichie en propylène (15), de façon à fournir au moins une partie du froid nécessaire au refroidissement et à la liquéfaction progressives d'au moins ledit gaz issu de la pyrolyse d'hydrocarbures (1) lors de son passage successif dans lesdites zones d'échange de chaleur (2, 6, 9, 20),
c) des moyens pour introduire les fractions au moins partiellement évaporées (17, 25) issues de l'étape (b) dans une partie d'une colonne de distillation (C1) appelée dééthaniseur, le condensat au moins partiellement évaporé enrichi en éthylène et en éthane (25) étant admis en un point de la dite partie de colonne de distillation (C1) plus élevé que le condensat au moins partiellement évaporé enrichi en propylène (17), ladite partie de colonne de distillation (C1) fonctionnant dans des conditions de température et pression permettant de séparer, dans une partie supérieure, un premier courant de tête gazeux (31) enrichi en éthylène et éthane renfermant, en proportion mineure, de l'acétylène, de l'hydrogène et du méthane, et dans une partie inférieure, un premier courant de fond liquide (18) enrichi en propylène qui est collecté,
d) des moyens pour envoyer le premier courant de tête gazeux (31) enrichi en éthylène et éthane provenant de l'étape (c) dans une zone d'élimination d'acétylène (R1) par extraction au solvant et/ou par hydrogénation sélective de l'acétylène au moyen de l'hydrogène contenu dans ledit premier courant de tête gazeux (31), pour fournir un courant (36) essentiellement exempt d'acétylène et
e) des moyens pour refroidir et fractionner, dans une partie d'une colonne de distillation appelée déméthaniseur (C2), le courant gazeux essentiellement exempt d'acétylène (36) issu de l'étape (d) en une deuxième fraction gazeuse de tête (44), enrichie en hydrogène et/ou méthane qui est collectée, et une deuxième fraction liquide de fond (43), enrichie en éthylène et éthane et essentiellement exempte d'acétylène qui est également collectée.

## Patentansprüche

1. Verfahren zum Fraktionieren eines von der Pyrolyse von Kohlenwasserstoffen (1) abgeleiteten im Wesentlichen wasserfreien Gases, welches Wasserstoff und Kohlenwasserstoffe enthält, insbesondere Kohlenwasserstoffe von C₁ bis C₃ einschließlich Ethylen, Propylen und Acetylen, in mindestens einen mit Wasserstoff und/oder Methan angereicherten Strom, in mindestens einen mit Ethylen angereicherten und an Acetylen verarmten Strom und in mindestens einen mit Propylen angereicherten Strom, **gekennzeichnet durch** folgende Verfahrensschritte:
a) fortschreitendes Abkühlen und Verflüssigen des von der Pyrolyse von Kohlenwasserstoffen (1) abgeleiteten Gases unter Druck **durch** Durchlaufen einer Reihe von immer kälteren Wärmetauscherbereichen (2, 6, 9, 20), Abtrennen von mindestens einem Kondensat nach Durchlaufen jedes Wärmetauscherbereiches von dem besagten Gas der Pyrolyse (1), wobei mindestens eines der Kondensate (15) mit Propylen angereichert ist und mindestens ein weiteres Kondensat (23) mit Ethylen und mit Ethan angereichert ist und in Lösung einen geringen Anteil an Wasserstoff, Methan und Acetylen enthält, und
Auffangen bzw. Sammeln des mit Wasserstoff angereicherten Restgases (27);
b) unter Absenken des Drucks zumindest teilweises Verdampfen des mit Ethylen und Ethan angereicherten Kondensats (23) und des mit Propylen angereicherten Kondensats (15),
und Erwärmen dieser, unabhängig oder nicht, in mindestens einem der besagten Wärmetauscherbereiche (2, 6, 9, 20) zum Austauschen von Wärme mit den abzukühlenden Fluiden, welche mindestens das von der Pyrolyse (1) abgeleitete Gas aufweisen, um jeweils eine Fraktion (25) zu liefern, die zumindest zum Teil **durch** die Druckabsenkung und die Erwärmung der mit Ethylen und mit Ethan angereicherten Fraktion (23) verdampft ist; und eine Fraktion (17), die zumindest zum Teil **durch** die Druckabsenkung und die Erwärmung der mit Propylen angereicherten Fraktion (15) verdampft ist, um so mindestens einen Teil der notwendigen Kälte zum fortschreitenden Abkühlen und Verflüssigen mindestens des von der Pyrolyse von Kohlenwasserstoffen (1) abgeleiteten Gases bei seinem Durchlaufen der aufeinanderfolgenden Wärmetauscherbereiche (2, 6, 9, 20) zu liefern;
c) Einleiten der zumindest zum Teil verdampften und sich aus Schritt b) ergebenden Fraktionen (17, 25) in einen Abschnitt einer Destillationskolonne (C1), der als Entethaner bezeichnet wird, wobei das zumindest zum Teil verdampfte mit Ethylen und mit Ethan angereicherte Kondensat (25) in einem höher liegenden Punkt des Abschnitts der Destillationskolonne (C1) zugeführt wird als das zumindest zum Teil verdampfte mit Propylen angereicherte Kondensat (17), wobei der Abschnitt der Destillationskolonne (C1) unter Temperatur- und Druckbedingungen arbeitet, wobei ermöglicht wird, dass in einem oben liegenden Abschnitt ein erster gashaltiger Kopf-Strom (31) abgetrennt wird, der mit Ethylen und Ethan angereichert ist, der in geringem Anteil Acetylen, Wasserstoff und Methan enthält, und dass in einem tiefer liegenden Abschnitt ein erster Strom von flüssigem Sumpf (18) abgetrennt wird, der mit Propylen angereichert ist und der gesammelt wird;
d) Einleiten des ersten gashaltigen Kopf-Stroms (31), der mit Ethylen und Ethan angereichert ist und aus dem Verfahrensschritt (c) hervorgeht, in einen Bereich zur Entfernung von Acetylen (R1) **durch** Extrahieren mit Lösungsmittel und/oder **durch** selektives Hydrieren des Acetylens mittels des in dem ersten gashaltigen Kopf-Strom (31) enthaltenen Wasserstoffs, um einen Strom (36) zu liefern, der im Wesentlichen frei von Acetylen ist; und
e) Abkühlen und Fraktionieren des gashaltigen Stroms (36), der im Wesentlichen frei von Acetylen ist und aus dem Verfahrensschritt (d) hervorgeht, in einem Abschnitt einer Destillationskolonne, der als Entmethaner (C2) bezeichnet wird, in eine zweite gashaltige Fraktion von Vorlauf (44), die mit Wasserstoff und/oder Methan angereichert ist, und die gesammelt wird, und in eine zweite flüssige Bodenfraktion (43), die mit Ethylen und mit Ethan angereichert und im Wesentlichen frei von Acetylen ist, und die ebenfalls gesammelt wird.

2. Verfahren nach Anspruch 1, **dadurch gekennzeichnet, dass** der von der Pyrolyse von Kohlenwasserstoffen (1) abgeleitete Gasstrom unter einem Druck von 15 bis 50 bar, vorzugsweise 28 bis 38 bar, steht, und dass der Bereich bzw. die Zone der Destillation (C1) unter einem Druck von 10 bis 30 bar, vorzugsweise 14 bis 24 bar, steht, niedriger als der Druck des Gases der Pyrolyse.

3. Verfahren nach Anspruch 1 oder 2, **dadurch gekennzeichnet, dass** die in den Abschnitt der Destillationskolonne (C1), der als Entethaner bezeichnet wird, eingeleiteten, verdampften Kondensate Wasserstoff enthalten, welcher zu einem solchen Anteil gelöst ist, dass der erste gashaltige Kopf-Strom (31) von 2 bis 10 Mol-%, vorzugsweise von 4 bis 5 Mol-%, Wasserstoff enthält, und dass der Verfahrensschritt (d) durch selektives Hydrieren im Wesentlichen zu Ethylen des in dem ersten gashaltigen Kopf-Strom (31) enthaltenen Acetylens mittels des in dem ersten gashaltigen Kopf-Strom aus dem Verfahrensschritt (c) enthaltenen Wasserstoffs durchgeführt wird, wobei die Temperatur des Hydrierbereiches zwischen 0 und 160° C einschließlich liegt.

4. Verfahren nach einem der Ansprüche 1 bis 3, **dadurch gekennzeichnet, dass** der Wasserstoff, der in den als Entethaner bezeichneten Abschnitt der Destillationskolonne (C1) eingeleiteten, verdampften Kondensate gelöst ist, der einzige verwendete Wasserstoff für das im Verfahrensschritt (d) ausgeführte Hydrieren ist.

5. Verfahren nach einem der Ansprüche 1 bis 4, **dadurch gekennzeichnet, dass** im Verfahrensschritt (c) in den oberen Abschnitt des Entethaners (C1) zwei oder drei Kondensate eingeleitet werden, welche nach aufeinander folgendem Durchlaufen des Gases der Pyrolyse jeweils in zwei oder drei Wärmetauscherbereichen im Verfahrensschritts (a) erhalten wurden, indem der erste Wärmetauscherbereich als der erste betrachtet wird, der mit dem Gas der Pyrolyse (1) in Kontakt kommt.

6. Verfahren nach einem der Ansprüche 1 bis 5, **dadurch gekennzeichnet, dass** die zweite gashaltige Fraktion des aus dem Entmethaner abgeleiteten Vorlaufs (44) durch Destillieren gereinigt wird, um Ethylen und Ethan zurückzugewinnen.

7. Verfahren nach einem der Ansprüche 1 bis 5, **dadurch gekennzeichnet, dass** das Gas der Pyrolyse (1) ein Gas der Pyrolyse von Ethan oder von einer Mischung aus Ethan/Propan ist, und dass die zweite gashaltige Fraktion des aus dem Entmethaner abgeleiteten Vorlaufs (44) mit dem Gas der Pyrolyse (1) ohne Rückgewinnung von Ethylen für eine neue Behandlung in Mischung mit dem Gas der Pyrolyse (1) im Verfahrensschritt (a) vermischt wird.

8. Verfahren nach einem der Ansprüche 1 bis 7, **dadurch gekennzeichnet, dass** der Gehalt an Wasserstoff des vom Entethaner abgeleiteten ersten gashaltigen Kopf-Stroms (31) durch Hinzufügen von Wasserstoff (27) vergrößert wird, der aus dem Vorlauf eines Separators bzw. Abscheiders (22 oder 22A) eines zum Teil kondensierten Fluids (24C) hervorgeht, wobei das Fluid (24C) aus der Kühlung in einem Wärmetauscherbereich (26) des restlichen gashaltigen Fluids (24) stammt, das aus der Kühlung in den aufeinanderfolgenden Wärmetauscherbereichen (2, 6, 9, 20) des Gases der Pyrolyse (1) hervorgeht.

9. Verfahren nach einem der Ansprüche 1 bis 8, **dadurch gekennzeichnet, dass** ein Anteil der aus dem Entmethaner hervorgehenden zweiten flüssigen Bodenfraktion (43) zum Entethaner zurückgeführt wird, um so die Konzentration von Acetylen des aus dem Entethaner abgeleiteten ersten gashaltigen Kopf-Stroms (31) zu reduzieren.

10. Verfahren nach einem der Ansprüche 1 bis 9, **dadurch gekennzeichnet, dass** der Verfahrensschritt (d) durch Extrahieren von Acetylen mittels eines Lösungsmittels ausgeführt wird.

11. Verfahren nach einem der vorhergehenden Ansprüche, **dadurch gekennzeichnet, dass** die Konzentration von Kohlenmonoxid, die in dem ersten gashaltigen Kopf-Strom (31) enthalten ist, eine Moderatorwirkung auf die Geschwindigkeit der katalysierten Reaktion in dem Bereich zur Entfernung von Acetylen (R1) aufweist.

12. Anlage zur Fraktionierung eines von der Pyrolyse von Kohlenwasserstoffen (1) abgeleiteten Gases, welches Wasserstoff und Kohlenwasserstoffe einschließt, insbesondere Kohlenwasserstoffe von C₁ bis C₃ einschließlich Ethylen, Propylen und Acetylen, in mindestens einen mit Wasserstoff und/oder Methan angereicherten Strom, in mindestens einen mit Ethylen angereicherten und an Acetylen verarmten Strom und in mindestens einen mit Propylen angereicherten Strom, **dadurch gekennzeichnet, dass** die Anlage Folgendes aufweist:
a) Einrichtungen zur fortschreitenden Abkühlung und Verflüssigung des von der Pyrolyse von Kohlenwasserstoffen ( 1 ) abgeleiteten Gases unter Druck durch Durchlauf einer Reihe von immer kälteren Wärmetauscherbereichen (2, 6, 9, 20), Einrichtungen zur Abtrennung von mindestens einem Kondensat nach Durchlauf jedes Wärmetauscherbereiches von dem Gas der Pyrolyse (1), wobei mindestens eines der Kondensate (15) mit Propylen angereichert ist und mindestens ein weiteres Kondensat (23) mit Ethylen und mit Ethan angereichert ist und in Lösung einen geringen Anteil an Wasserstoff, Methan und Acetylen enthält, und Einrichtungen zur Sammelung des mit Wasserstoff angereicherten Restgases (27);
b) Einrichtungen zur zumindest teilweisen Verdampfung unter Absenkung des Drucks des mit Ethylen und Ethan angereicherten Kondensats (23) und des mit Propylen angereicherten Kondensats (15), und Einrichtungen zur Erwärmung dieser in mindestens einem der Wärmetauscherbereiche (2, 6, 9, 20) zum Austausch von Wärme mit abzukühlenden Fluiden, welche mindestens das von der Pyrolyse (1) abgeleitete Gas aufweisen, um jeweils eine Fraktion (25) zu liefern, die zumindest zum Teil durch die Druckabsenkung und die Erwärmung der mit Ethylen und mit Ethan angereicherten Fraktion (23) verdampft ist; und eine Fraktion (17), die zumindest zum Teil durch die Druckabsenkung und die Erwärmung der mit Propylen angereicherten Fraktion (15) verdampft ist, um so mindestens einen Teil der notwendigen Kälte zum fortschreitenden Abkühlen und Verflüssigen mindestens des von der Pyrolyse von Kohlenwasserstoffen (1) abgeleiteten Gases bei seinem Durchlaufen der besagten aufeinanderfolgenden Wärmetauscherbereiche (2, 6, 9, 20) zu liefern;
c) Einrichtungen zur Einleitung der zumindest zum Teil verdampften und sich in Schritt b) ergebenden Fraktionen (17, 25) in einen Abschnitt einer Destillationskolonne (C1), der als Entethaner bezeichnet wird, wobei das zumindest zum Teil verdampfte mit Ethylen und mit Ethan angereicherte Kondensat (25) in einem höher liegenden Punkt des Abschnitts der Destillationskolonne (C1) zugeführt wird als das zumindest zum Teil verdampfte mit Propylen angereicherte Kondensat (17), wobei der Abschnitt der Destillationskolonne (C1) unter Temperatur- und Druckbedingungen arbeitet, wobei ermöglicht ist, dass in einem oben liegenden Abschnitt ein erster gashaltigen Kopf-Strom (31) abgetrennt ist, der mit Ethylen und Ethan angereichert ist, wobei er in geringem Anteil Acetylen, Wasserstoff und Methan enthält, und dass in einem tiefer liegenden Abschnitt ein erster Strom von flüssigem Sumpf (18) abgetrennt ist, der mit Propylen angereichert ist und der gesammelt wird;
d) Einrichtungen zur Einleitung des ersten gashaltigen Kopf-Stroms (31), der mit Ethylen und Ethan angereichert ist und aus der Stufe (c) hervorgeht, in einen Bereich zur Entfernung von Acetylen (R1) durch Extraktion mit Lösungsmittel und/oder durch selektive Hydrierung des Acetylens mittels des in dem besagten ersten gashaltigen Kopf-Stroms (31) enthaltenen Wasserstoffs, um einen Strom (36) zu liefern, der im Wesentlichen frei von Acetylen ist; und
e) Einrichtungen zur Abkühlung und Fraktionierung des gashaltigen Stroms (36), der im Wesentlichen frei von Acetylen ist und aus der Stufe (d) hervorgeht, in einem Abschnitt einer Destillationskolonne, der als Entmethaner (C2) bezeichnet wird, in eine zweite gashaltige Fraktion von Vorlauf (44), die mit Wasserstoff und/oder Methan angereichert ist, und die gesammelt wird, und in eine zweite flüssige Bodenfraktion (43), die mit Ethylen und mit Ethan angereichert und im Wesentlichen frei von Acetylen ist, und die ebenfalls gesammelt wird.

## Claims

1. A method for fractionation of a substantially anhydrous gas resulting from hydrocarbon pyrolysis (1), containing hydrogen and hydrocarbons, notably the hydrocarbons C₁ to C₃, including ethylene, propylene and acetylene, into at least a hydrogen-enriched and/or methane-enriched flow, at least an ethylene-enriched and acetylene-depleted flow and at least a propylene-enriched flow, **characterised in that**:
a) said gas resulting from the hydrocarbon pyrolysis (1) is progressively cooled and liquefied under pressure by it passing through a series of increasingly cold heat-exchange areas (2, 6, 9, 20), at least one condensate is separated from said pyrolysis gas (1) after it passes into each heat-exchange area, at least one of the condensates (15) being propylene-enriched and at least one other condensate (23) being ethylene-enriched and ethane-enriched and containing in solution a minor proportion of hydrogen, methane and acetylene, and the residual gas (27), which is hydrogen-rich, is collected,
b) the ethylene-enriched and ethane-enriched condensate (23) and the propylene-enriched condensate (15) are at least partly evaporated by lowering the pressure and are independently or non-independently heated in at least one of said heat-exchange areas (2, 6, 9, 20) by means of heat-exchange with the fluids to be cooled, including at least the gas resulting from the pyrolysis (1), to respectively provide an at least partially evaporated fraction (25) resulting from the expansion and heating of the ethylene-enriched and ethane-enriched fraction (23) and an at least partially evaporated fraction (17) resulting from the expansion and heating of the propylene-enriched fraction (15) so as to provide at least part of the coldness necessary for the progressive cooling and liquefaction of at least said gas resulting from the hydrocarbon pyrolysis (1) during its passage through said successive heat-exchange areas (2, 6, 9, 20),
c) the at least partially evaporated fractions (17, 25) resulting from step (b) are introduced into a part of a distillation column (C1) called the de-ethaniser, the at least partially evaporated ethylene-enriched and ethane-enriched condensate (25) being admitted at a higher point of said distillation column part (C1) than the at least partially evaporated propylene-enriched condensate (17), whereby said distillation column part (C1) functions under temperature and pressure conditions which enable the separation, in an upper part, of a first, ethylene-enriched and ethane-enriched, top, gas flow (31) including acetylene, hydrogen and methane as a minor proportion, and the separation in a lower part, of a first, propylene-enriched, bottom, liquid flow (18), which is collected,
d) the first, ethylene-enriched and ethane-enriched, top, gas flow (31) from step (c) is sent into an area for eliminating acetylene (R1) by means of solvent extraction and/or by means of selective acetylene hydrogenation using the hydrogen contained in said first, top, gas flow (31), in order to provide a flow (36) which is essentially actylene-free and
e) the essentially acetylene-free gas flow (36) resulting from step (d) is cooled and fractionated, in a part of a distillation column called the de-methaniser (C2), into a hydrogen-enriched and/or methane-enriched, second, top, gas fraction (44), which is collected, and a second, bottom, liquid fraction (43), which is ethylene-enriched and ethane-enriched and essentially free of acetylene and which is also collected.

2. The method according to Claim 1, **characterised in that** the gas flow resulting from the hydrocarbon pyrolysis (1) is at a pressure of 15-50 bar, preferably 28-38 bar, and the distillation area (C1) is at a pressure of 10-30 bar, preferably 14-24 bar, which is lower than the pressure of the pyrolysis gas.

3. The method according to Claim 1 or Claim 2, **characterised in that** the evaporated condensates introduced into the part of the distillation column (C1) called the de-ethaniser contain hydrogen dissolved proportionally such that said first, top, gas flow (31) contains 2 to 10 mole %, preferably 4 to 5 mole %, of hydrogen, and **in that** step (d) is carried out using selective hydrogenation, essentially in ethylene, of the acetylene contained in the first, top, gas flow (31), using the hydrogen contained in said first, top, gas flow of step (c), the temperature of the hydrogenation area being between 0 and 160°C inclusive.

4. The method according to any one of Claims 1 to 3, **characterised in that** the hydrogen dissolved in the evaporated condensates introduced into the part of the distillation column (C1) called the de-ethaniser is the only hydrogen used in the hydrogenation carried out in step (d).

5. The method according to any one of Claims 1 to 4, **characterised in that** two or three condensates, obtained after the pyrolysis gas is successively passed through two or three heat-exchange areas, respectively, of step (a), are sent into the high part of the de-ethaniser (C1) of step (c), whereby it should be taken into account that the first heat-exchange area is that which is the first to come into contact with the pyrolysis gas (1).

6. The method according to any one of Claims 1 to 5, **characterised in that** the second, top, gas fraction (44) resulting from the demethaniser is purified by distillation to recover ethylene and ethane.

7. The method according to any one of Claims 1 to 5, **characterised in that** the pyrolysis gas (1) is a pyrolysis gas of ethane or of an ethane/propane mixture and **in that** the second, top, gas fraction (44) resulting from the de-methaniser is mixed with the pyrolysis gas (1) without recovering ethylene, for a new treatment in a mixture with the pyrolysis gas (1) of step (a).

8. The method according to any one of Claims 1 to 7, **characterised in that** the hydrogen content of the first, top, gas flow (31) resulting from the de-ethaniser is increased by adding hydrogen (27) from the top of a partly condensed fluid (24C) separator (22 or 22A), said fluid (24C) resulting from the refrigeration, in a heat-exchange area (26), of the residual gas fluid (24) resulting from the refrigeration, in the successive heat-exchange areas (2, 6, 9, 20), of the pyrolysis gas (1).

9. The method according to any one of Claims 1 to 8, **characterised in that** a part of the second lower, liquid fraction (43) resulting from the de-methaniser is recycled towards the de-ethaniser so as to reduce the acetylene concentration of the first, top, gas flow (31) resulting from the de-ethaniser.

10. The method according to any one of Claims 1 to 9, **characterised in that** step (d) is carried out using acetylene extraction by means of a solvent.

11. The method according to any one of the previous claims, **characterised in that** the carbon monoxide concentration contained in the first, top, gas flow (31) has a moderating effect upon the speed of the reaction catalysed in the area for eliminating acetylene (R1).

12. An installation for fractionation of a gas resulting from hydrocarbon pyrolysis (1), containing hydrogen and hydrocarbons, notably the hydrocarbons C₁ to C₃, including ethylene, propylene and acetylene, into at least a hydrogen-enriched and/or methane-enriched flow, at least an ethylene-enriched and acetylene-depleted flow and at least a propylene-enriched flow, **characterised in that** it contains:
a) means for progressively cooling and liquefying said gas, resulting from the hydrocarbon pyrolysis (1), under pressure by it passing through a series of increasingly cold heat-exchange areas (2, 6, 9, 20), means for separating at least one condensate from said pyrolysis gas (1) after it passes into each heat-exchange area, at least one of the condensates (15) being propylene-enriched and at least one other condensate (23) being ethylene-enriched and ethane-enriched and containing in solution a minor proportion of hydrogen, methane and acetylene, and means for collecting the residual gas (27), which is hydrogen-rich,
b) means for at least partly evaporating the ethylene-enriched and ethane-enriched condensate (23) and the propylene-enriched condensate (15) by lowering the pressure and means for independently heating them in at least one of said heat-exchange areas (2, 6, 9, 20) by means of heat-exchange with the fluids to be cooled, to respectively provide an at least partially evaporated fraction (25) resulting from the expansion and heating of the ethylene-enriched and ethane-enriched fraction (23) and an at least partially evaporated fraction (17) resulting from the expansion and heating of the propylene-enriched fraction (15) so as to provide at least part of the coldness necessary for the progressive cooling and liquefaction of at least said gas resulting from the hydrocarbon pyrolysis (1) during its passage through said successive heat-exchange areas (2, 6, 9, 20),
c) means for introducing the at least partially evaporated fractions (17, 25) resulting from step (b) into a part of a distillation column (C1) called the de-ethaniser, the at least partially evaporated ethylene-enriched and ethane-enriched condensate (25) being admitted at a higher point of said distillation column part (C1) than the at least partially evaporated propylene-enriched condensate (17), whereby said distillation column part (C1) functions under temperature and pressure conditions which enable the separation, in an upper part, of a first, ethylene-enriched and ethane-enriched, top, gas flow (31) including acetylene, hydrogen and methane as a minor proportion, and the separation, in a lower part, of a first, propylene-enriched, bottom, liquid flow (18), which is collected,
d) means for sending the first, ethylene-enriched and ethane-enriched, top, gas flow (31) from step (c) into an area for eliminating acetylene (R1) by means of solvent extraction and/or by means of selective acetylene hydrogenation using the hydrogen contained in said first, top, gas flow (31), in order to provide a flow (36) which is essentially actylene-free and
e) means for cooling and fractionating, in a part of a distillation column called the demethaniser (C2), the essentially acetylene-free gas flow (36) resulting from step (d) into a hydrogen-enriched and/or methane-enriched, second, top, gas fraction (44), which is collected, and a second, bottom, liquid fraction (43), which is ethylene-enriched and ethane-enriched and essentially free of acetylene and which is also collected.
